# EUROPÄISCHE PATENTSCHRIFT

(11) **EP 1 226 017 B1**
(45) Veröffentlichungstag und Bekanntmachung des Hinweises auf die Patenterteilung: **29.03.2006**
(21) Anmeldenummer: 00956121.8
(22) Anmeldetag: 02.08.2000
(51) Int. Cl.: B29C 49/36, B29C 49/42, B29C 49/56, B29C 49/12

(54) **VERFAHREN UND VORRICHTUNG ZUR BLASFORMUNG VON BEHÄLTERN**
METHOD AND DEVICE FOR BLOW MOULDING CONTAINERS
PROCEDE ET DISPOSITIF DE FORMAGE PAR SOUFFLAGE DE CONTENANTS

(30) Priorität: 08.10.1999 DE 19948474
(43) Veröffentlichungstag der Anmeldung: 31.07.2002
(73) Patentinhaber: SIG Corpoplast GmbH & Co. KG, 22145 Hamburg (DE)
(72) Erfinder: HARTWIG, Klaus, D-20253 Hamburg (DE)
(74) Vertreter: Klickow, Hans-Henning
(86) Internationale Anmeldenummer: PCT/DE2000/002592
(87) Internationale Veröffentlichungsnummer: WO 2001/026882

(56) Entgegenhaltungen:
- DE-B- 1 232 331
- GB-A- 928 529
- US-A- 4 005 966
- US-A- 5 433 916

## Beschreibung

Die Erfindung betrifft ein Verfahren zur Blasformung von Behältern aus einem thermoplastischen Material, bei dem der Behälter innerhalb einer Blasform, die im Bereich mindestens einer Blasstation positioniert ist, durch Einwirkung eines unter Druck stehenden Mediums aus einem temperierten Vorformling gefertigt wird und bei dem als Blasform zur Begrenzung mindestens einer Kavität mindestens zwei Blasformsegmente verwendet werden, sowie bei dem die Blasformsegmente entlang eines geschlossenen Umlaufweges bewegt werden, und bei dem die Blasformsegmente benachbarter geschlossener Kavitäten entlang wenigstens einer Teilstrecke ihrer Bewegung entlang des Umlaufweges derart eng nebeneinander angeordnet werden, daß ein Abstand einander zugewandter äußerer Begrenzungen des diese Kavitäten umgebenden Materials in Bewegungsrichtung entlang des Umlaufweges kleiner ist als ein maximaler Abstand der Blasformsegmente in einem geöffneten Zustand der Kavitäten, in dem ein Herausnehmen der geblasenen Behälter aus den Kavitäten möglich ist.

Die Erfindung betrifft darüber hinaus eine Vorrichtung zur Blasformung von Behältern aus einem thermoplastischen Material, die mindestens eine Blasstation mit mindestens einer Blasform aufweist, die aus mindestens zwei Blasfortnsegmenten zur Begrenzung mindestens einer Kavität ausgebildet ist sowie bei der die Blasformsegmente im Bereich einer umlaufenden Transporteinrichtung angeordnet sind, sowie bei der die Blasformsegmente benachbarter geschlossener Kavitäten entlang wenigstens einer Teilstrecke ihres Umlaufweges einen Abstand zueinander derart aufweisen, daß ein Abstand einander zugewandter äußerer Begrenzungen des diese Kavitäten umgebenden Materials in Bewegungsrichtung der Blasformsegmente entlang des Umlaufweges kleiner dimensioniert ist, als ein maximaler Abstand der Blasformsegmente in einem geöffneten zustand der Kavitäten beträgt, und bei der in diesem geöffneten Zustand dieser maximale Abstand mindestens gleich einem maximalen Durchmesser der geblasenen Behälter dimensioniert ist.

Bei einer derartigen Behälterformung durch Blasdruckeinwirkung werden zuvor temperierte Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling gesteuert eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Aus der DE-B 1 232 331 ist es bereits für eine einstufige Vorrichtung zur Behälterformung bekannt, Blasstationen mit einem relativ zueinander veränderlichen Abstand anzuordnen. Die Blasstationen werden entlang von kreisförmigen Ortsfesten Schienen geführt. In einem geöffneten Zustand der Spritzgußformen können die Blasformen durch den hierbei gebildeten Abstand hindurchgeführt werden und übernehmen den gespritzten Vorformling.

Innerhalb der bekannten Vorrichtungen zur Blasformung können die Vorformlinge sowie die geblasenen Behälter mit Hilfe unterschiedlicher Handhabungseinrichtungen trans-portiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Bei Vorrichtungen zur Verarbeitung von thermoplastischen Kunststoffen durch Blasverformung werden typischerweise Formen verwendet, die zur Gewährleistung kurzer Prozeßzyklen geeignet temperiert werden müssen. Häufig erfolgt nicht nur eine Temperierung auf ein vorgegebenes Temperaturniveau, sondern in Abhängigkeit von den jeweiligen Verfahrensschritten wird die Form auf ein vorgegebenes Temperaturprofil beheizt.

Eine Anordnung von Blasstationen auf einem rotierenden Blasrad erfolgt in der Regel derart, daß es möglich ist, daß nebeneinander angeordnete Blasstationen gleichzeitig geöffnet werden können. Gemäß einer üblichen Konstruktion erfolgt dies durch eine buchartige Aufklappbarkeit relativ zu einer Drehachse, die einem Mittelpunkt des Blasrades zugewandt angeordnet ist. Durch diese Bewegungsfreiheit der Formträger der Blasstationen ist es insbesondere möglich, nahezu gleichzeitig aus einer Blasstation einen fertig geblasenen Behälter zu entnehmen und bei einer unmittelbar benachbarten und in Bewegungsrichtung des Blasrades vornliegenden zweiten Blasstation einen zu expandierenden Vorformling einzusetzen.

Bei einer Anordnung einer größeren Anzahl von Blasstationen auf einem rotierenden Blasrad führt diese Konstruktion jedoch dazu, daß ein relativ großer Durchmesser des Blasrades vorliegt. Dies hat wiederum zur Folge, daß bei einer Rotation des Blasrades eine relativ große kinetische Energie vorliegt, die bei einem Maschinenstop abgebremst werden muß.

Aufgabe der vorliegenden Erfindung ist es, ein Verfahren der einleitend genannten Art derart anzugeben, daß bei hoher Produktionskapazität die bei der Durchführung der erforderlichen Bewegungsabläufe auftretenden kinetischen Energien reduziert werden.

Diese Aufgabe wird erfindungsgemäß dadurch gelöst, daß die Behälter in einem zweistufigen Verfahren aus spritzgußtechnisch hergestellten Vorformlingen gefertigt werden, daß die Vorformlinge im Bereich der Blasstation von einem Recksystem unter Verwendung einer Reckstange gereckt werden und daß die Blasstationen von einem rotierenden Blasrad positioniert werden.

Weitere Aufgabe der vorliegenden Erfindung ist es, eine Vorrichtung der einleitend genannten Art derart zu konstruieren, daß eine kompakte Bauweise unterstützt wird.

Diese Aufgabe wird erfindungsgemäß dadurch gelöst, daß die Blasstationen als Bauteile einer zweistufigen Einrichtung zur Behälterformung ausgebildet und auf einem rotierenden Blasrad angeordnet sind und daß im Bereich des Blasrades Recksysteme mit Reckstangen angeordnet sind.

Durch die vorgeschlagene Anordnung der Blasformsegmente wird berücksichtigt, daß die Blasstationen entlang des wesentlichen Teilbereiches des Umlaufweges geschlossen sind und daß die gemäß dem Stand der Technik zwischen den Blasstationen vorhandenen Lücken während der Einnahme dieses geschlossenen zustandes nicht zur Durchführung von Bewegungsvorgängen benötigt werden. Die Anordnung der Blasformsegmente erfolgt deshalb derart, daß eine Positionierbarkeit relativ zueinander realisiert ist, die eine Bereitstellung des erforderlichen Bewegungsbereiches dann ermöglicht, wenn auch tatsächlich Bewegungen eines bestimmten Blasformsegmentes durchgeführt werden. Während der weiteren Betriebsphasen werden die Blasformsegmente benachbarter Kavitäten jedoch relativ dicht aneinander angeordnet.

Durch die entsprechende Anordnung und Positionierung der Blasformsegmente ist es möglich, bei einem gegebenen Blasraddurchmesser eine größere Anzahl von Kavitäten vorzusehen. Bei einer vorgegebenen Kavitätenanzahl kann der Durchmesser des Blasrades bei gleichbleibender Produktivität erheblich verkleinert werden. Die bei Abbremsvorgängen und Beschleunigungsvorgängen wirksamen kinetischen Energien werden hierdurch erheblich reduziert.

Ein äußerst kompakter Aufbau kann dadurch erreicht werden, daß die Formträger jeweils mit mindestens zwei auf einander gegenüberliegenden Seiten angeordneten Formhälften ausgestattet sind.

Zur Bereitstellung einer entgegen der Bewegungsrichtung der Formträger wandernden Lücke wird vorgeschlagen, daß die Formträger entlang eines Umfanges eines Blasrades verschoben werden.

Ein erforderlicher Freiraum für die Entnahme der geblasenen Behälter sowie die Eingabe von Vorformlingen wird dadurch bereitgestellt, daß eine Verschiebung der Formträger entlang des Umfanges des Blasrades bei der Durchführung von Belade- und Entladevorgängen erfolgt.

Zu einer Unterstützung einer relativ zu einem Blasrad stationären Anordnung möglichst vieler Bauelemente wird vorgeschlagen, daß im Bereich des Blasrades angeordnete Reckeinrichtungen relativ zum Blasrad ortsfest mit diesem bewegt werden.

Eine einfache Kinematik wird auch dadurch unterstützt, daß vom Blasrad eine Anzahl von Reckeinrichtungen transportiert wird, die um "1" größer ist als die Anzahl der Kavitäten.

Ebenfalls wird ein einfacher Bewegungsablauf dadurch unterstützt, daß bei der Durchführung der Bewegung der Formträger relativ zum Blasrad eine Verschiebung zu der in Bewegungsrichtung übernächsten Reckeinrichtung durchgeführt wird.

Vorzugsweise zur Temperierung der Blasformen wird vorgeschlagen, daß zur Versorgung der Blasstation mit mindestens einem Medium ein Drehverteiler verwendet wird, der mit einer größeren Geschwindigkeit als das Blasrad rotiert.

Zur Kompensation unterschiedlicher Bewegungswege aufgrund der wandernden Lücke wird vorgeschlagen, daß die Rotationsgeschwindigkeit des Drehverteilers derart gewählt wird, daß die Ausdehnung des Bewegungsbereiches der Formträger relativ zum Blasrad kompensiert wird.

Gemäß einer alternativen Ausführungsform ist auch daran gedacht, daß die Formträger zur Unterstützung eines Beund Entladevorganges in radialer Richtung verschoben werden.

Zur weiteren Minimierung der erforderlichen Abstände wird vorgeschlagen, daß die Formträger relativ zum Blasrad radial verschoben werden und relativ zueinander eine Schwenkbewegung durchführen.

In der Zeichnung sind Ausführungsbeispiele der Erfindung schematisch dargestellt. Es zeigen:
- Fig. 1:: Eine perspektivische Darstellung einer Blas- station zur Herstellung von Behältern aus vorformlingen,
- Fig. 2:: einen Längsschnitt durch eine Blasform, in der ein Vorformling gereckt und expandiert wird,
- Fig. 3:: eine Skizze zur Veranschaulichung eines grundsätzlichen Aufbaus einer Vorrichtung zur Blasformung von Behältern,
- Fig. 4:: eine Prinzipskizze zur Veranschaulichung einer Vorrichtung mit Formträgern, bei der auf einem gemeinsamen Träger Blasformsegmente zur Begrenzung unterschiedlicher benachbarter Kavitäten angeordnet sind,
- Fig. 5:: eine gegenüber Fig. 4 abgewandelte Ausführungsform mit teleskopierbaren Halterungen für die Formträger
und
- Fig. 6:: eine weitere Ausführungsform, bei der die Formträger sowohl verschieblich als auch verschwenkbar angeordnet sind.

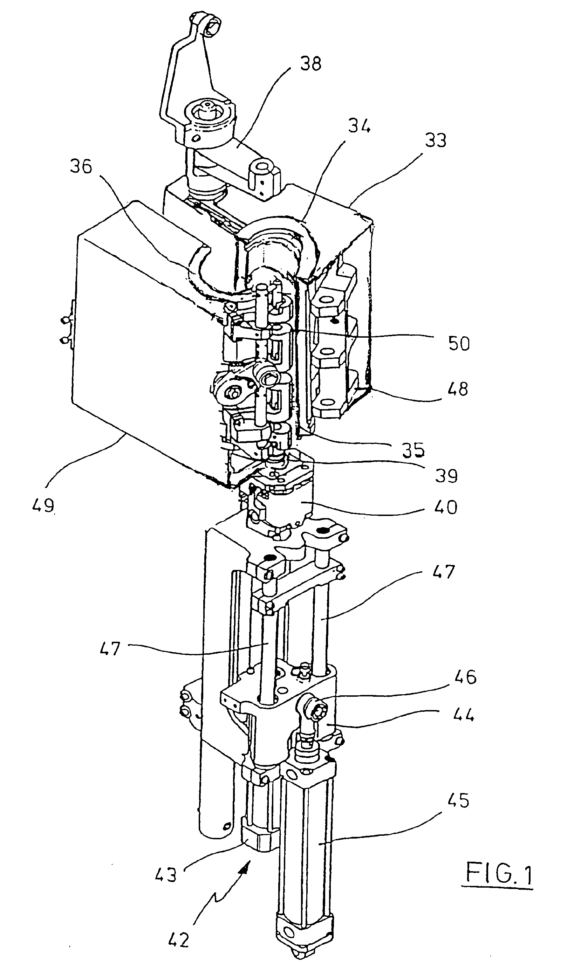

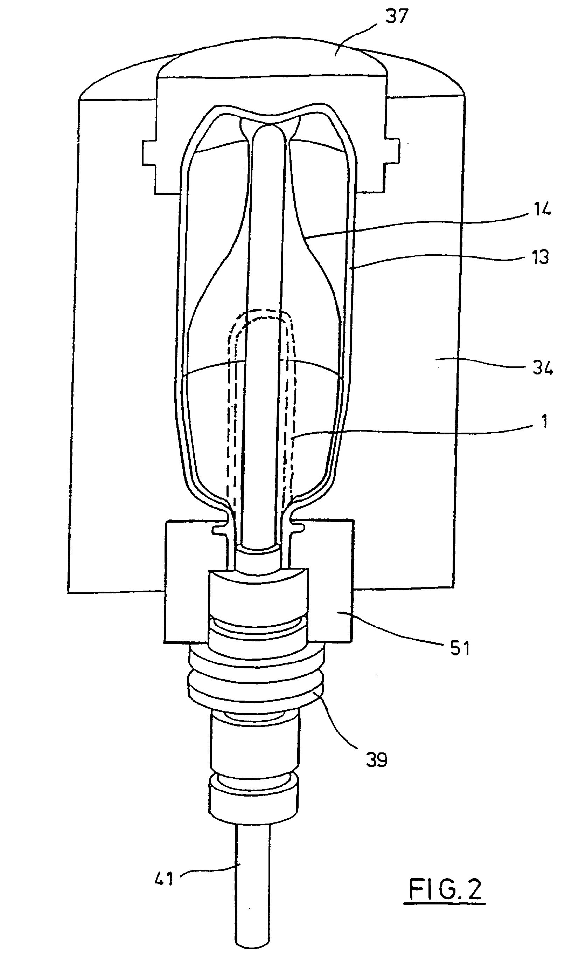

Der prinzipielle Aufbau einer Vorrichtung zur Umformung von Vorformlingen (1) in Behälter (13) ist in Fig. 1 und in Fig. 2 dargestellt.

Die Vorrichtung zur Formung des Behälters (13) besteht im wesentlichen aus einer Blasstation (33), die mit einer Blasform (34) versehen ist, in die ein Vorformling (1) einsetzbar ist. Der Vorformling (1) kann ein spritzgegossenes Teil aus Polyäthylenterephthalat sein. Zur Ermöglichung eines Einsetzens des Vorformlings (1) in die Blasform (34) und zur Ermöglichung eines Herausnehmens des fertigen Behälters (13) besteht die Blasform (34) aus Formhälften (35,36) und einem Bodenteil (37), der von einer Hubvorrichtung (38) positionierbar ist. Der Vorformling (1) kann im Bereich der Blasstation (33) von einem Transportdorn (39) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (34) einzusetzen.

Zur Ermöglichung einer Druckluftzuleitung ist unterhalb des Transportdornes (39) ein Anschlußkolben (40) angeordnet, der dem Vorformling (1) Druckluft zuführt und gleichzeitig eine Abdichtung relativ zum Transportdorn (39) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (41), die von einem Zylinder (42) positioniert wird. Grundsätzlich ist es aber auch denkbar, eine mechanische Positionierung der Reckstange (41) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (33) auf einem rotierenden Blasrad (53) angeordnet sind. Eine Verwendung von Zylindern (42) ist zweckmäßig, wenn ortsfest angeordnete Blasstationen (33) vorgesehen sind.

Bei der in Fig. 1 dargestellten Ausführungsform ist das Recksystem derart ausgebildet, daß eine Tandem-Anordnung von zwei Zylindern (42) bereitgestellt ist. Von einem Primärzylinder (43) wird die Reckstange (41) zunächst vor Beginn des eigentlichen Reckvorganges bis in den Bereich eines Bodens des Vorformlings (1) gefahren. Während des eigentlichen Reckvorganges wird der Primärzylinder (43) mit ausgefahrener Reckstange (41) gemeinsam mit einem den Primärzylinder (43) tragenden Schlitten (44) von einem Sekundärzylinder (45) oder über eine Kurvensteuerung positioniert. Insbesondere ist daran gedacht, den Sekundärzylinder (45) derart kurvengesteuert einzusetzen, daß von einer Führungsrolle (46), die während der Durchführung des Reckvorganges an einer Kurvenbahn entlang gleitet, eine jeweilige Reckposition vorgegeben wird. Die Führungsrolle (46) wird vom Sekundärzylinder (45) gegen die Führungsbahn gedrückt. Der Schlitten (44) gleitet entlang von zwei Führungselementen (47).

Nach einem Schließen der im Bereich von Trägern (48, 49) angeordneten Formhälften (35,36) erfolgt eine Verriegelung der Träger (48, 49) relativ zueinander mit Hilfe einer Verriegelungseinrichtung (50).

Zur Anpassung an unterschiedliche Formen des Mündungsabschnittes (2) ist gemäß Fig. 2 die Verwendung separater Gewindeeinsätze (51) im Bereich der Blasform (34) vorgesehen.

Fig. 2 zeigt zusätzlich zum geblasenen Behälter (13) auch gestrichelt eingezeichnet den Vorformling (1) und schematisch eine sich entwickelnde Behälterblase (14).

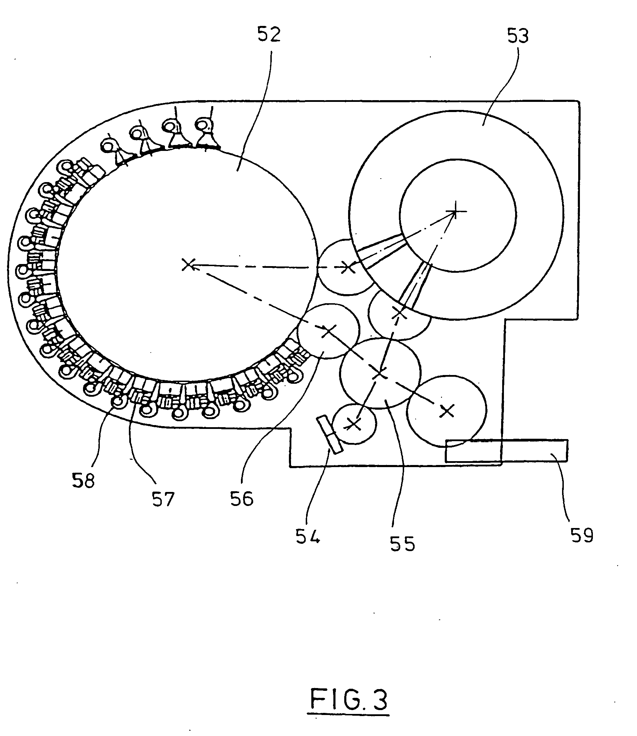

Fig. 3 zeigt den grundsätzlichen Aufbau einer Blasmaschine, die mit einem rotierenden Heizrad (52) sowie einem rotierenden Blasrad (53) versehen ist. Ausgehend von einer Vorformlingseingabe (54) werden die Vorformlinge (1) von Übergaberädern (55,56) in den Bereich des Heizrades (52) transportiert. Entlang des Heizrades (52) sind Heizstrahler (57) sowie Gebläse (58) angeordnet, um die Vorformlinge (1) zu temperieren. Nach einer ausreichenden Temperierung der Vorformlinge (1) werden diese an das Blasrad (53) übergeben, in dessen Bereich die Blasstationen (33) angeordnet sind. Die fertig geblasenen Behälter (13) werden von weiteren Übergaberädern einer Ausgabestrecke (59) zugeführt.

Um einen Vorformling (1) derart in einen Behälter (13) umformen zu können, daß der Behälter (13) Materialeigenschaften aufweist, die eine lange Verwendungsfähigkeit von innerhalb des Behälters (13) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

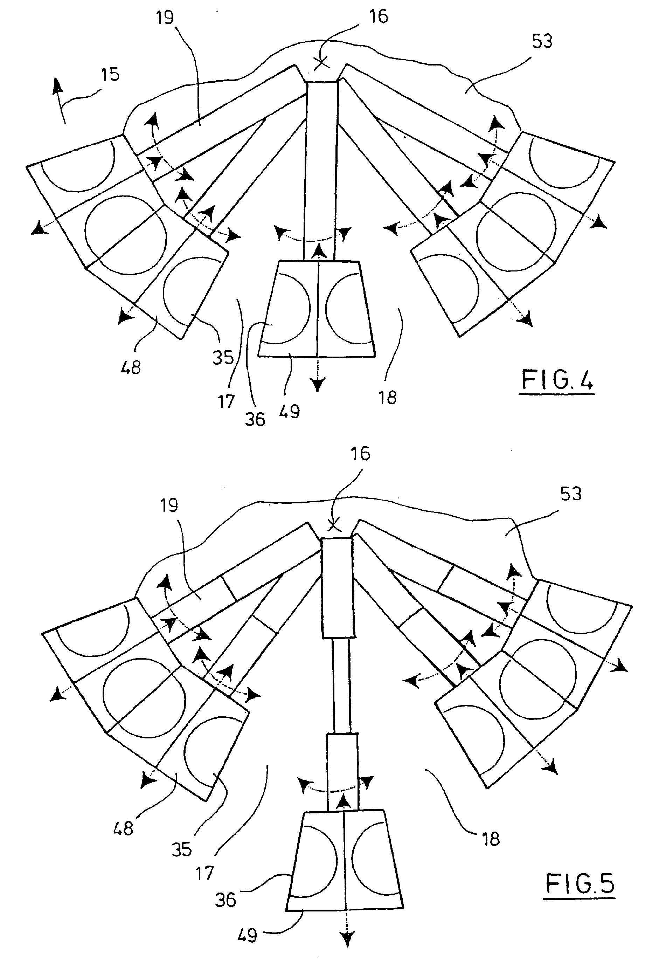

Fig. 4 zeigt eine Ausführungsform, bei der im Bereich jedes Formträgers (48, 49) einander abgewandt jeweils zwei Formhälften (35, 36) angeordnet sind, die zur Begrenzung benachbarter Kavitäten vorgesehen sind. Die Formträger werden entlang eines geschlossenen Umlaufweges (15) bewegt. Bei einer Realisierung unter Verwendung eines Blasrades (53) erfolgt hierbei eine Bewegung um einen Mittelpunkt (16) herum.

Entlang des wesentlichen Teiles des Umlaufweges (15) sind die Formträger (48, 49) derart dicht nebeneinander angeordnet, daß eine Öffnungsbewegung nicht möglich ist. Bei der in Fig. 4 dargestellten Ausführungsform weist die Anordnung der Formträger (48, 49) entlang des Umlaufweges (15) jedoch mindestens eine Lücke (17, 18) auf. Durch eine Relativbewegung zwischen den Formträgern (48, 49) und dem Blasrad (53) wandert diese Lücke (17, 18) entgegen der Bewegungsrichtung der Formträger (48, 49) derart, daß die Bewegung des Blasrades im wesentlichen kompensiert wird und die Lücke (17, 18) hierdurch örtlich auf einen relativ begrenzten Bereich der gesamten Vorrichtung lokalisiert ist.

In Abhängigkeit von der jeweiligen Kinematik ist es möglich, zeitgleich zwei Lücken (17, 18) vorzusehen, wobei im Bereich der in Bewegungsrichtung vorne liegenden Lücke (17) eine Eingabe von Vorformlingen (1) in die Kavitäten erfolgt und im Bereich der Lücke (18) eine Entnahme der geblasenen Behälter (13) aus den Kavitäten durchgeführt wird.

Bei der erläuterten Ausführungsform ist es zweckmäßig, sowohl im Bereich der dem Mittelpunkt (16) zugewandten Begrenzungen der Formträger (48, 49) als auch im Bereich der abgewandten Begrenzungen Verriegelungseinrichtungen (15) vorzusehen.

Eine Halterung und Führung der Formträger (48, 49) kann beispielsweise mit Hilfe von Tragarmen (19) erfolgen. Insbesondere ist aber auch gedacht, eine Verschieblichkeit der Formträger (48, 49) entlang des äußeren Umfanges des Blasrades (53) vorzusehen und beispielsweise eine Schienenführung zu realisieren.

Zur Gewährleistung einer materialschonenden Schlauchverbindung der einzelnen Blasstationen (33) mit einer Versorgung für Temperiermedien ist insbesondere daran gedacht, für diese Medien einen Drehverteiler vorzusehen, der etwas schneller rotiert als das Blasrad (53). Eine Kopplung kann hierbei über eine geeignete Getriebeauslegung erfolgen. Die Rotation des Drehverteilers erfolgt dabei vorzugsweise gerade soviel schneller als die Rotation des Blasrades, daß bei einer vollen Umdrehung ein Weg durchlaufen wird, der der Ausdehnung der Blasstationen (33) entlang des Umlaufweges (15) zuzüglich der Ausdehnung der Lücke (17, 18) entlang dieses Umlaufweges entspricht.

Alternativ oder ergänzend zu einer Beweglichkeit der Formträger (48, 49) im Bereich der Lücke (17, 18) in Richtung des Umlaufweges (15) ist es gemäß der Darstellung in Fig. 5 auch möglich, eine Teleskopierbarkeit des Tragarmes (19) vorzusehen oder anderweitig eine radiale Verschieblichkeit der Formträger (48, 49) zu realisieren. Eine derartige zusätzliche radiale Beweglichkeit ermöglicht es, die Dimensionierung der Lücken (17, 18) zu verkleinern. In Fig. 5 sind die Lücken (17, 18) zur Verdeutlichung der zeichnerischen Darstellung gegenüber realen Verhältnissen stark vergrößert dargestellt.

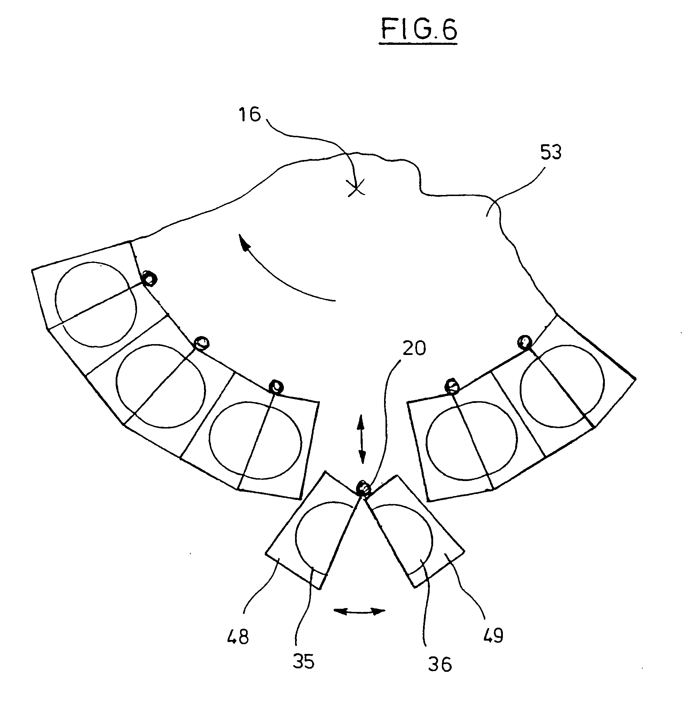

Fig. 6 zeigt eine weitere Ausführungsvariante. Gemäß dieser Ausführungsform sind die Formträger (48, 49) nicht in Richtung des Umlaufweges (15) relativ zum Blasrad (53) beweglich, sondern es ist eine radiale Beweglichkeit relativ zum Mittelpunkt (16) sowie zusätzlich eine Aufklappbarkeit relativ zu einer Schwenkachse (20) vorgesehen. Die Blasstationen (33) bestehen bei dieser Ausführungsformen ähnlich wie konventionelle Blasstationen aus zwei Formträgern (48, 49), die Formhälften (35, 36) haltern, die eine gemeinsame Kavität begrenzen.

Durch eine geeignete Wahl des Abstandes der einzelnen Blasstationen (33) sowie durch eine geeignete Koordinierung der radialen Verschiebungsbewegungen sowie der Schwenkbewegungen der Formträger (48, 49) ist es grundsätzlich auch möglich, zwei benachbarte Blasstationen wenigstens teilweise gleichzeitig zu öffnen. Durch eine derartige Koordinierung der Bewegungen ist ein beschleunigtes Be- und Entladen der Blasstationen (33) möglich. Hierbei kann beispielsweise ausgenutzt werden, daß ein größter Öffnungswinkel der Formträger (48, 49) nur zu einer Entnahme des geblasenen Behälters (13) vorliegen muß. Nach einem Herausnehmen des geblasenen Behälters (13) ist es bereits wieder möglich, eine Schließbewegung der Formträger (48, 49) einzuleiten, da zu einem Einsetzen eines Vorformlings (1) ein wesentlich geringerer Bewegungsspielraum erforderlich ist.

Die vorstehenden Erläuterungen im Hinblick auf die Kavitäten der einzelnen Blasstationen umfassen auch die Verwendung von geteilten Kavitäten zur gleichzeitigen Herstellung von zwei oder mehr Behältern. Bei der Verwendung entsprechender Mehrfachkavitäten werden typischerweise zwei oder eine größere Anzahl von Kavitäten in horizontaler Richtung nebeneinander angeordnet. Bekannt ist ebenfalls eine Anordnung in vertikaler Richtung übereinander. Derartige Mehrfachkavitäten sind insbesondere zur Herstellung von kleinen Behältern vorteilhaft. Bei einer entsprechenden Verwendung von Mehrfachkavitäten erhöht sich typischerweise die Anzahl der Reckstangen in gleicher Anzahl. Vorteilhafterweise werden jedoch zur Unterstützung einer vereinfachten Bauform die den einzelnen Teilkavitäten zugeordneten Reckstangen von einer gemeinsamen Reckeinrichtung positioniert.

Alternativ zu der erläuterten Zuordnung der einzelnen Funktionsbaugruppen zu den einzelnen Blasstationen ist es grundsätzlich auch möglich, die Funktionsbaugruppen ortsfest entlang von Teilbereichen des Umlaufweges des Blasrades anzuordnen und über entsprechende Kopplungseinrichtungen die jeweils benötigten Funktionen in Abhängigkeit vom Verfahrensablauf den jeweiligen Blasstationen zuzuführen. Beispielsweise wäre in einem derartigen Fall eine Reckeinrichtung nicht auf dem Blasrad angeordnet, sondern entlang des zugeordneten Umlaufweges des Blasrades wäre eine Positioniereinrichtung für die Reckeinrichtung vorgesehen und das Blasrad würde lediglich die Reckstange mit zugeordnetem Kopplungselement tragen. In ähnlicher Weise könnten auch entlang des Umlaufweges Zuführbereiche für die unterschiedlichen benötigten Blasdrücke angeordnet werden.

## Patentansprüche

1. Verfahren zur Blasformung von Behältern (13) aus einem thermoplastischen Material, bei dem der Behälter (13) innerhalb einer Blasform (34), die im Bereich mindestens einer Blasstation (33) positioniert ist, durch Einwirkung eines unter Druck stehenden Mediums aus einem temperierten Vorformling (1) gefertigt wird und bei dem als Blasform (34) zur Begrenzung mindestens einer Kavität mindestens zwei Blasformsegmente verwendet werden, sowie bei dem die Blasformsegmente entlang eines geschlossenen Umlaufweges (15) bewegt werden, und bei dem die Blasformsegmente benachbarter geschlossener Kavitäten entlang wenigstens einer Teilstrecke ihrer Bewegung entlang des Umlaufweges (15) derart eng nebeneinander angeordnet werden, daß ein Abstand einander zugewandter äußerer Begrenzungen des diese Kavitäten umgebenden Materials in Bewegungsrichtung entlang des Umlaufweges (15) kleiner ist als ein maximaler Abstand der Blasformsegmente in einem geöffneten Zustand der Kavitäten, in dem ein Herausnehmen der geblasenen Behälter (13) aus den Kavitäten möglich ist, **dadurch gekennzeichnet, daß** die Behälter (12) in einem zweistufigen Verfahren aus spritzgußtechnisch hergestellten Vorformlingen gefertigt werden, daß die Vorformlinge (1) im Bereich der Blasstation (3) von einem Recksystem unter Verwendung einer Reckstange (41) gereckt werden und daß die Blasstationen (33) von einem rotierenden Blasrad (53) positioniert werden.

2. Verfahren nach Anspruch 1, **dadurch gekennzeichnet, daß** die Formträger (48, 49) jeweils mit mindestens zwei auf einander gegenüberliegenden Seiten angeordneten Formhälften (35, 36) ausgestattet sind.

3. Verfahren nach Anspruch 1 oder 2, **dadurch gekennzeichnet, daß** die Formträger (48, 49) entlang eines Umfanges eines Blasrades (53) verschoben werden.

4. Verfahren nach einem der Ansprüche 1 bis 3, **dadurch gekennzeichnet, daß** eine Verschiebung der Formträger (48, 49) entlang des Umfanges des Blasrades (53) bei der Durchführung von Belade- und Entladevorgängen erfolgt.

5. Verfahren nach einem der Ansprüche 1 bis 4, **dadurch gekennzeichnet, daß** im Bereich des Blasrades (53) angeordnete Reckeinrichtungen relativ zum Blasrad (53) ortsfest mit diesem bewegt werden.

6. Verfahren nach einem der Ansprüche 1 bis 5, **dadurch gekennzeichnet, daß** vom Blasrad (53) eine Anzahl von Reckeinrichtungen transportiert wird, die um "1" größer ist als die Anzahl der Kavitäten.

7. Verfahren nach einem der Ansprüche 1 bis 6, **dadurch gekennzeichnet, daß** bei der Durchführung der Bewegung der Formträger (48, 49) relativ zum Blasrad (53) eine Verschiebung zu der in Bewegungsrichtung übernächsten Reckeinrichtung durchgeführt wird.

8. Verfahren nach einem der Ansprüche 1 bis 7, **dadurch gekennzeichnet, daß** zur Versorgung der Blasstation (33) mit mindestens einem Medium ein Drehverteiler verwendet wird, der mit einer größeren Geschwindigkeit als das Blasrad (53) rotiert.

9. Verfahren nach Anspruch 8, **dadurch gekennzeichnet, daß** die Rotationsgeschwindigkeit des Drehverteilers derart gewählt wird, daß die Ausdehnung des Bewegungsbereiches der Formträger (48, 49) relativ zum Blasrad (53) kompensiert wird.

10. verfahren nach einem der Ansprüche 1 bis 9, **dadurch gekennzeichnet, daß** die Formträger (48, 49) zur Unterstützung eines Be- und Entladevorganges in radialer Richtung verschoben werden.

11. Verfahren nach einem der Ansprüche 1 bis 10, **dadurch gekennzeichnet, daß** die Formträger (48, 49) relativ zum Blasrad (53) radial verschoben werden und relativ zueinander eine Schwenkbewegung durchführen.

12. Vorrichtung zur Blasformung von Behältern (12) aus einem thermoplastischen Material, die mindestens eine Blasstation (33) mit mindestens einer Blasform (34) aufweist, die aus mindestens zwei Blasformsegmenten zur Begrenzung mindestens einer Kavität ausgebildet ist sowie bei der die Blasformsegmente im Bereich einer umlaufenden Transporteinrichtung angeordnet sind, sowie bei der die Blasformsegmente benachbarter geschlossener Kavitäten entlang wenigstens einer Teilstrecke ihres Umlaufweges (15) einen Abstand zueinander derart aufweisen, daß ein Abstand einander zugewandter äußerer Begrenzungen des diese Kavitäten umgebenden Materials in Bewegungsrichtung der Blasformsegmente entlang des Umlaufweges (15) kleiner dimensioniert ist, als ein maximaler Abstand der Blasformsegmente in einem geöffneten Zustand der Kavitäten beträgt, und bei der in diesem geöffneten zustand dieser maximale Abstand mindestens gleich einem maximalen Durchmesser der geblasenen Behälter dimensioniert ist, **dadurch gekennzeichnet, daß** die Blasstationen (22) als Bauteile einer zweistufigen Einrichtung zur Behälterformung ausgebildet und auf einem rotierenden Blasrad (53) angeordnet sind und daß im Bereich des Blasrades (53) Recksysteme mit Reckstangen (41) angeordnet sind.

13. Vorrichtung nach Anspruch 12, **dadurch gekennzeichnet, daß** die Kavitäten in einer radialen Richtung eines die Blasstation (33) tragenden Blasrades (53) geteilt sind.

14. Vorrichtung nach Anspruch 12 oder 13, **dadurch gekennzeichnet, daß** jeder Formträger (48, 49) mindestens zwei auf einander gegenüberliegenden Seiten des Formträgers (48, 49) angeordnete Formhälften (35, 36) trägt.

15. Vorrichtung nach einem der Ansprüche 12 bis 14, **dadurch gekennzeichnet, daß** die von einem Formträger (48, 49) gehalterten Formhälften (35, 36) entlang des geschlossenen Umlaufweges (15) hintereinander angeordneten Kavitäten zugeordnet sind.

16. Vorrichtung nach einem der Ansprüche 12 bis 15, **dadurch gekennzeichnet, daß** entlang des Umlaufweges (15) mindestens eine Lücke (17, 18) zwischen den Formträgern (48, 49) angeordnet ist, die eine Dimensionierung aufweist, die mindestens gleich dem maximalen Durchmesser der Kavitäten ist.

17. Vorrichtung nach einem der Ansprüche 12 bis 16, **dadurch gekennzeichnet, daß** den Blasstationen (33) Reckeinrichtungen zuordbar sind und daß die Anzahl der Reckeinrichtungen um "1" größer als die Anzahl der Kavitäten gewählt ist.

18. Vorrichtung nach einem der Ansprüche 12 bis 17, **dadurch gekennzeichnet, daß** die Kavitäten in mindestens zwei voneinander getrennte Teilkavitäten unterteilt sind.

19. Vorrichtung nach einem der Ansprüche 12 bis 18, **dadurch gekennzeichnet, daß** die Formträger (48, 49) entlang einer Schienenführung im Bereich des Umlaufweges (15) gehaltert sind.

20. Vorrichtung nach einem der Ansprüche 12 bis 19, **dadurch gekennzeichnet, daß** zur Zuführung mindestens eines Mediums ein Drehverteiler vorgesehen ist, der über flexible Leitungen mit den Blasstationen (33) verbunden ist.

21. Vorrichtung nach Anspruch 20, **dadurch gekennzeichnet, daß** der Drehverteiler schneller rotiert als das Blasrad (53).

## Claims

1. Method for blow moulding containers (13) from a thermoplastic material, in which the container (13) is manufactured inside a blow mould (34) which is positioned in the area of at least one blowing station (33), by action of a medium which is under pressure from a heated parison (1) and in which at least two blow mould segments are used as blow mould (34) to limit at least one cavity, and in which the blow mould segments are moved along a closed circulating track (15), and in which the blow mould segments of adjoining closed cavities are arranged closely alongside each other along at least one stretch of its movement along the circulating track (15), such that a distance of external limits facing each other of the material surrounding these cavities in the direction of movement along the circulating track (15) is smaller than a maximum distance of the blow mould segments in an open state of the cavities, in which removal of the blown containers (13) from the cavities is possible, **characterised in that** the containers (12) are manufactured in a two-stage method from parisons produced by injection moulding, that the parisons (1) are stretched in the area of the blowing station (3) by a stretching system using a stretching bar (41) and that the blowing stations (33) are positioned by a rotating blowing wheel (53).

2. Method according to Claim 1, **characterised in that** the mould carriers (48, 49) are each provided with at least two mould halves (35, 36) arranged on sides opposite to each other.

3. Method according to Claim 1 or 2, **characterised in that** the mould carriers (48, 49) are displaced along a perimeter of a blowing wheel (53).

4. Method according to one of Claims 1 to 3, **characterised in that** a displacement of the mould carriers (48, 49) along the perimeter of the blowing wheel (53) is carried out when undertaking loading and unloading operations.

5. Method according to one of Claims 1 to 4, **characterised in that** stretching devices arranged in the area of the blowing wheel (53) are moved fixed with this relative to the blowing wheel (53).

6. Method according to one of Claims 1 to 5, **characterised in that** a number of stretching devices which is greater than the number of cavities by "1" is transported by the blowing wheel (53).

7. Method according to one of Claims 1 to 6, **characterised in that** when carrying out the movement of the mould carriers (48, 49) relative to the blowing wheel (53) a displacement is carried out to the stretching device next but one in the direction of movement.

8. Method according to one of Claims 1 to 7, **characterised in that** a rotary distributor which rotates at a greater speed than the blowing wheel (53), is used to supply the blowing station (33) with at least one medium.

9. Method according to Claim 8, **characterised in that** the speed of rotation of the rotary distributor is selected such that the expansion of the area of movement of the mould carriers (48, 49) is compensated relative to the blowing wheel (53).

10. Method according to one of Claims 1 to 9, **characterised in that** the mould carriers (48, 49) are displaced in radial direction to promote a loading and unloading procedure.

11. Method according to one of Claims 1 to 10, **characterised in that** the mould carriers (48, 49) are displaced radially relative to the blowing wheel (53) and a swinging movement carried out relative to one another.

12. Device for blow moulding containers (12) from a thermoplastic material which has at least one blowing station (33) with at least one blow mould (34) which is formed from at least two blow mould segments to limit at least one cavity and in which the blow mould segments are arranged in the area of a circulating transport device, and in which the blow mould segments of adjacent closed cavities have, along at least one stretch of its circulation route (15), a distance to one another such that a distance of external limits facing each other of the material surrounding these cavities in the direction of movement of the blow mould segments along the circulating track (15) is dimensioned smaller than a maximum distance of the blow mould segments in an open state of the cavities, and in which in this open state this maximum distance is dimensioned at least equal to a maximum diameter of the blown containers, **characterised in that** the blowing stations (22) are developed as components of a two-stage device for moulding containers and are arranged on a rotating blowing wheel (53) and that stretching systems with stretching bars (41) are arranged in the area of the blowing wheel (53).

13. Device according to Claim 12, **characterised in that** the cavities are divided in a radial direction of a blowing wheel (53) supporting the blowing station (33).

14. Device according to Claim 12 or 13, **characterised in that** each mould carrier (48, 49) supports at least two mould halves (35, 36) arranged on opposite sides of the mould carrier (48, 49) to each other.

15. Device according to one of Claims 12 to 14, **characterised in that** the mould halves (35, 36) supported by a mould carrier (48, 49) are arranged along the closed circulating track (15) of cavities arranged one behind the other.

16. Device according to one of Claims 12 to 15, **characterised in that** at least one gap (17, 18) is arranged between the mould carriers (48, 49) along the circulating track (15) which has dimensioning which is at least equal to the maximum diameter of the cavities.

17. Device according to one of Claims 12 to 16, **characterised in that** stretching devices can be assigned to the blowing stations (33) and that the number of stretching devices is selected greater by "1" than the number of cavities.

18. Device according to one of Claims 12 to 17, **characterised in that** the cavities are sub-divided into at least two partial cavities separated from each other.

19. Device according to one of Claims 12 to 18, **characterised in that** the mould carriers (48, 49) are supported along a rail track in the area of the circulating track (15).

20. Device according to one of Claims 12 to 19, **characterised in that** a rotary distributor which is connected to the blowing stations (33) via flexible lines is provided to feed at least one medium.

21. Device according to Claim 20, **characterised in that** the rotary distributor rotates faster than the blowing wheel (53).

## Revendications

1. Procédé de formage-soufflage de récipients (13) en matériau thermoplastique,
dans lequel le récipient (13) est réalisé à partir d'une ébauche (1) à température ambiante, sous l'opération d'un fluide sous pression, dans un moule de soufflage (34) disposé dans la région d'au moins une station de soufflage (33),
dans lequel au moins deux segments de moule de soufflage sont utilisés comme moule de soufflage (34) destiné à délimiter au moins une cavité,
dans lequel les segments de moule de soufflage sont déplacés le long d'un parcours circulaire fermé (15) et
dans lequel, au moins le long d'une partie de leur déplacement le long du parcours circulaire (15), les segments de moule de soufflage de cavités voisines et fermées sont agencés suffisamment près les uns des autres pour que la distance entre les frontières extérieures tournées l'une vers l'autre du matériau qui entoure ces cavités dans la direction de déplacement le long du parcours circulaire (15) soit plus petite que la distance maximale entre les segments de moule de soufflage quand les cavités sont dans la position ouverte dans laquelle les récipients soufflés (13) peuvent être retirés des cavités,
**caractérisé en ce que** les récipients (13) sont fabriqués dans un procédé en deux étapes à partir d'ébauches réalisées selon la technique du moulage par injection,
**en ce que**, dans la région des stations de soufflage (3), les ébauches (1) sont étirées par un système d'étirage par recours à une tige d'étirage (41) et **en ce que** les stations de soufflage (33) sont positionnées par une roue rotative de soufflage (53).

2. Procédé selon la revendication 1, **caractérisé en ce que** chacun des porte-moule (48, 49) est muni d'au moins deux moitiés de moule (35, 36) agencées sur des côtés mutuellement opposés.

3. Procédé selon les revendications 1 ou 2, **caractérisé en ce que** les porte-moule (48, 49) sont déplacés le long du pourtour d'une roue de soufflage (53).

4. Procédé selon l'une des revendications 1 à 3, **caractérisé en ce que** le déplacement des porte-moule (48, 49) le long du pourtour de la roue de soufflage (53) a lieu lors de l'exécution d'opérations de chargement et d'opérations de déchargement.

5. Procédé selon l'une des revendications 1 à 4, **caractérisé en ce que** les dispositifs d'étirage agencés dans la région de la roue de soufflage (53) sont déplacés avec la roue de soufflage (53) et solidairement par rapport à celle-ci.

6. Procédé selon l'une des revendications 1 à 5, **caractérisé en ce que** le nombre de dispositifs d'étirage transportés par la roue de soufflage (53) dépasse de "1" le nombre de cavités.

7. Procédé selon l'une des revendications 1 à 6, **caractérisé en ce qu'**un déplacement vers le deuxième dispositif d'étirage qui suit dans la direction de déplacement est effectué lorsque les porte-moule (48, 49) sont déplacés par rapport à la roue de soufflage (53).

8. Procédé selon l'une des revendications 1 à 7, **caractérisé en ce que**, pour délivrer au moins un fluide à la station de soufflage (33), on utilise un distributeur rotatif qui tourne plus vite que la roue de soufflage (53).

9. Procédé selon la revendication 8, **caractérisé en ce que** la vitesse de rotation du distributeur rotatif est sélectionnée de façon à compenser l'allongement de la région de déplacement des porte-moule (48, 49) par rapport à la roue de soufflage (53).

10. Procédé selon l'une des revendications 1 à 9, **caractérisé en ce que** les porte-moule (48, 49) sont déplacés dans la direction radiale pour assister une opération de chargement ou de déchargement.

11. Procédé selon l'une des revendications 1 à 10, **caractérisé en ce que** les porte-moule (48, 49) sont déplacés radialement par rapport à la roue de soufflage (53) et effectuent un déplacement de pivotement les uns par rapport aux autres.

12. Dispositif de formage-soufflage de récipients (12) en matériau thermoplastique, qui présente au moins une station de soufflage (33) munie d'au moins un moule de soufflage (34) configuré avec au moins deux segments de moule de soufflage qui délimitent au moins une cavité,
dans lequel les segments de moule de soufflage sont agencés dans la région d'un dispositif de transport rotatif,
dans lequel, le long d'une partie au moins de l'étendue de leur déplacement le long du parcours circulaire (15), les segments de moule de soufflage de cavités voisines et fermées présentent entre eux une distance telle que dans la direction de déplacement des segments de moule de soufflage le long du parcours circulaire (15), la distance entre les frontières extérieures tournées l'une vers l'autre du matériau qui entoure ces cavités est plus petite que la distance maximale entre les segments de moule de soufflage quand les cavités sont dans la position ouverte, cette distance maximale dans cette position ouverte étant au moins égale au plus grand diamètre du récipient soufflé,
**caractérisé en ce que** les stations de soufflage (22) sont configurées comme composants d'une installation à deux étages de façonnage de récipients et sont agencées sur une roue rotative de soufflage (53) et **en ce que** des systèmes d'étirage munis d'une tige d'étirage (41) sont agencés dans la région de la roue de soufflage (53).

13. Dispositif selon la revendication 12, **caractérisé en ce que** les cavités sont réparties dans la direction radiale d'une roue de soufflage (53) qui porte les stations de soufflage (33).

14. Dispositif selon les revendications 12 ou 13, **caractérisé en ce que** chaque porte-moule (48, 49) porte au moins deux moitiés de moule (35, 36) agencées sur des côtés du porte-moule (48, 49) mutuellement opposés.

15. Dispositif selon l'une des revendications 12 à 14, **caractérisé en ce que** les moitiés de moule (35, 36) maintenues par un porte-moule (48, 49) sont associées à des cavités agencées les unes derrières les autres le long du parcours circulaire fermé (15).

16. Dispositif selon l'une des revendications 12 à 15, **caractérisé en ce que** le long du parcours circulaire (15), au moins un vide (17, 18) dont les dimensions sont au moins égales au plus grand diamètre des cavités est agencé entre les porte-moule (48, 49).

17. Dispositif selon l'une des revendications 12 à 16, **caractérisé en ce que** des dispositifs d'étirage peuvent être associés aux stations de soufflage (33) et **en ce que** le nombre de dispositifs d'étirage sélectionné dépasse de "1" le nombre de cavités.

18. Dispositif selon l'une des revendications 12 à 17, **caractérisé en ce que** les cavités sont divisées en au moins deux cavités partielles séparées l'une de l'autre.

19. Dispositif selon l'une des revendications 12 à 18, **caractérisé en ce que** dans la région du parcours circulaire (15), les porte-moule (48, 49) sont maintenus le long d'un rail de guidage.

20. Dispositif selon l'une des revendications 12 à 19, **caractérisé en ce qu'**un distributeur rotatif qui est relié aux stations de soufflage (33) par l'intermédiaire de conduits flexibles est prévu pour délivrer au moins un fluide.

21. Dispositif selon la revendication 20, **caractérisé en ce que** le distributeur rotatif tourne plus vite que la roue de soufflage (53).
